(19) Europäisches Patentamt
European Patent Office
Office européen des brevets

(11) **EP 1 924 823 B1**

(12) **EUROPÄISCHE PATENTSCHRIFT**

(45) Veröffentlichungstag und Bekanntmachung des Hinweises auf die Patenterteilung:
**11.02.2009  Patentblatt 2009/07**

(21) Anmeldenummer: **06793118.8**

(22) Anmeldetag: **31.08.2006**

(51) Int Cl.:
*G01C 19/56* (2006.01)    *G01P 9/04* (2006.01)

(86) Internationale Anmeldenummer:
**PCT/EP2006/065882**

(87) Internationale Veröffentlichungsnummer:
**WO 2007/031409 (22.03.2007 Gazette 2007/12)**

(54) **VERFAHREN UND ANORDNUNG ZUR ÜBERWACHUNG EINER SENSORANORDNUNG**

METHOD AND SYSTEM FOR MONITORING A SENSOR ARRANGEMENT

PROCEDE ET DISPOSITIF POUR CONTROLER UN DISPOSITIF DE DETECTION

(84) Benannte Vertragsstaaten:
**DE FR IT**

(30) Priorität: **12.09.2005  DE 102005043559**

(43) Veröffentlichungstag der Anmeldung:
**28.05.2008  Patentblatt 2008/22**

(73) Patentinhaber: **Continental Automotive GmbH
30165 Hannover (DE)**

(72) Erfinder:
• **MAYER-WEGELIN, Raphael
   61381 Friedrichsdorf (DE)**
• **MORELL, Heinz-Werner
   67659 Kaiserslautern (DE)**

(56) Entgegenhaltungen:
WO-A-20/05001378        WO-A-20/05001381
WO-A-20/05075939

**Beschreibung**

Die Erfindung betrifft ein Verfahren und eine Anordnung zur Überwachung einer Sensoranordnung mit einem Vibrationskreisel, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird.

Beispielsweise aus EP 0 461 761 B1 sind Drehratensensoren bekannt geworden, bei welchen ein Vibrationskreisel in zwei gegenüber einer Hauptachse radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, ist eine fehlerfreie Funktion der Drehratensensoren eine wichtige Voraussetzung für einen sicheren Betrieb des Kraftfahrzeugs. Deshalb sind bereits verschiedene Einrichtungen und Verfahren zur Überwachung und Drehratensensoren bekannt geworden, beispielsweise durch WO 2005/01378 A1, wobei zur Überwachung redundante analoge Komponenten und weitere digitale Komponenten verwendet werden.

Aufgabe der vorliegenden Erfindung ist es, die Überwachung weiterhin zu verbessern und Fehlfunktionen oder Ausfälle möglichst vorzeitig zu erkennen.

Diese Aufgabe wird bei dem erfindungsgemäßen Verfahren dadurch gelöst,

- dass aus der Differenz zwischen dem aktuellen Wert der Eigenfrequenz, einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz ein erster Wert der Temperaturänderung gegenüber der Messung berechnet wird,
- dass aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors ein zweiter Wert der Temperaturänderung gegenüber der Messung berechnet wird,
- dass die beiden berechneten Werte verglichen werden und
- dass bei einer ein vorgegebenes Maß überschreitenden Abweichung ein Fehlersignal erzeugt wird.

Bei einschlägigen Sensoranordnungen sind meistens ohnehin ein Temperatursensor und ein Mikrocontroller vorhanden, so dass zur Durchführung des erfindungsgemäßen Verfahrens kein zusätzlicher Hardware-Aufwand, sondern lediglich eine Implementierung der erfindungsgemäßen Maßnahmen als Programm erforderlich ist.

Sofern bei einer Sensoranordnung der Vibrationskreisel nicht in unmittelbarem wärmeleitenden Kontakt zu den Schaltungen der Sensoranordnung steht, nehmen beim Betrieb die Schaltungen in der Regel eine höhere Temperatur als der Vibrationskreisel ein. Um in diesem Fall einen korrekten Vergleich zu ermöglichen, ist bei einer Weiterbildung des erfindungsgemäßen Verfahren vorgesehen, dass in die Berechnung eine Korrekturtemperatur einbezogen wird, die gegenüber dem Abgleich des Temperatursensors geänderte thermische Bedingungen berücksichtigt.

Diese Weiterbildung ist vorzugsweise derart ausgestaltet, dass die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnet wird.

Die Erfindung umfasst ferner eine Anordnung zur Überwachung einer Sensoranordnung mit Mitteln

- zur Berechnung eines ersten Wertes einer Temperaturänderung aus der Differenz zwischen dem aktuellen Wert der Eigenfrequenz, einem zuvor bei einem Abgleich gemessenen und in einem Speicher abgelegten Wert der Eigenfrequenz und aus dem Temperaturkoeffizienten der Eigenfrequenz,
- zur Berechnung eines zweiten Wertes einer Temperaturänderung aus der Differenz zwischen den Ausgangsgrößen eines Temperatursensors bei der aktuellen Temperatur und bei der Messtemperatur und dem Temperaturkoeffizienten des Temperatursensors,
- zum Vergleich der beiden berechneten Werte und
- zur Erzeugung eines Fehlersignals bei einer ein vorgegebenes Maß überschreitenden Abweichung.

Durch die in den abhingigen Ansprüchen aufgeführten Maßnahmen sind vorteilhafte Weiterbildungen und Verbesserungen der erfindungsgemäßen Anordnung möglich.

Die Erfindung lässt zahlreiche Ausführungsformen zu. Eine davon ist schematisch in der Zeichnung dargestellt und nachfolgend beschrieben. Die Zeichnung zeigt ein Blockschaltbild einer Sensoranordnung mit einem Vibrationskreisel mit den zur Durchführung des erfindungsgemäßen Verfahrens dienenden Elementen.

Die Sensoranordnung sowie Teile davon sind zwar als Blockschaltbilder dargestellt. Dieses bedeutet jedoch nicht, dass die erfindungsgemäße Sensoranordnung auf eine Realisierung mit Hilfe von einzelnen den Blöcken entsprechenden Schaltungen beschränkt ist. Die erfindungsgemäße Sensoranordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

Die Sensoranordnung weist einen Vibrationskreisel 1 auf mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreisses ist, der nicht dargestellt ist, da dessen Erläuterung zum Verständnis der Erfindung nicht erforderlich ist. Der primäre Regelkreis 6 dient zur Erregung von Schwingungen mit der Resonanzfrequenz des Vibrationskreisels von beispielsweise 14 kHz. Die Erregung erfolgt dabei in einer Achse des Vibrationskreisels, zu welcher die für den sekundären Regelkreis benutzte Schwingungsrichtung um 90° versetzt ist. Im nicht dargestellten sekundären Regelkreis wird das Signal SO in zwei Komponenten aufgespalten, von denen eine nach geeigneter Verarbeitung als der Drehrate proportionales Signal abnehmbar ist.

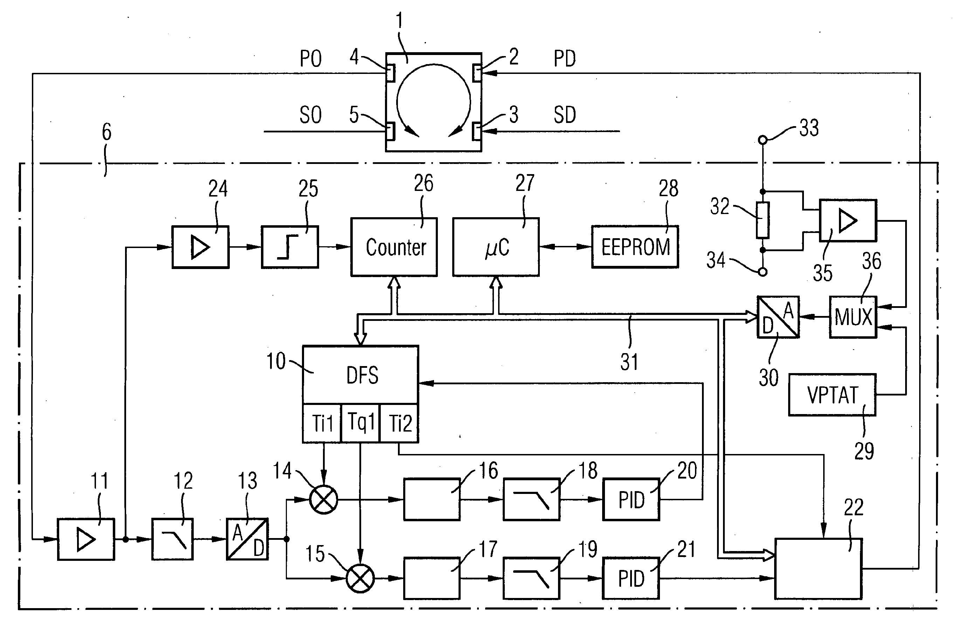

In beiden Regelkreisen erfolgt ein wesentlicher Teil der Signalverarbeitung digital. Die zur Signalverarbeitung erforderlichen Taktsignale werden in einem quarzgesteuerten digitalen Frequenz-Synthesierer 10 erzeugt, dessen Taktfrequenz im dargestellten Beispiel 14,5 MHz beträgt. Für die Anwendung des erfindungsgemäßen Verfahrens kommt im Wesentlichen der primäre Regelkreis in Frage, weshalb in Fig. 1 ein Ausführungsbeispiel für den primären Regelkreis dargestellt ist.

Der Regelkreis weist einen Verstärker 11 für das Ausgangssignal PO auf, an den sich ein Anti-Alias-Filter 12 und ein Analog/Digital-Wandler 13 anschließen. Mit Hilfe von Multiplizierern 14, 15, denen Träger Ti1 und Tq1 zugeführt werden, erfolgt eine Aufspaltung in eine Inphase-Komponente und eine Quadratur-Komponente. Beide Komponenten durchlaufen anschließend je ein (sinx/x)-Filter 16, 17 und ein Tiefpassfilter 18, 19. Der gefilterte Realteil wird einem PID-Regler 20 zugeführt, der den digitalen Frequenz-Synthesierer steuert, wodurch eine Phasenregelschaltung geschlossen wird, welche die richtige Phasenlage der Träger Ti1 und Tq1 bewirkt. Außerdem wird ein Träger Tq2 erzeugt, der in einer Schaltung 22 mit dem Ausgangssignal eines weiteren PID-Reglers 21 moduliert wird, der den tiefpassgefilterten Imaginärteil erhält. Das Ausgangssignal der Schaltung 22 wird dem Eingang 2 des Vibrationskreisels 1 als Erregersignal PD zugeführt. Anstelle der PID-Regler können je nach Voraussetzungen im Einzelnen auch andere Regler, beispielsweise PI-Regler, vorgesehen sein.

Zur Durchführung des erfindungsgemäßen Verfahrens ist ein Mikrocontroller 27 vorgesehen, der die einzelnen Schritte des erfindungsgemäßen Verfahrens steuert und Zugriff auf einen nicht-flüchtigen Speicher 28 hat, der als EEPROM ausgebildet ist. Ferner wird für das erfindungsgemäße Verfahren ein bei vielen Sensorschaltungen ohnehin vorhandener Temperatursensor benutzt, der aus einem eigentlichen Sensor 29 und einem Analog/Digital-Wandler 30 besteht. Ein Bussystem 31 verbindet die aufgeführten Komponenten untereinander und mit dem digitalen Frequenz-Synthesierer 10 sowie mit der Schaltung 22.

In den Speicher 28 wurde im Rahmen eines Abgleichverfahrens bei der Herstellung der Sensoranordnung der dann gemessene Wert FORT der Eigenfrequenz des Vibrationskreisels sowie die Temperatur, bei welcher die Messung erfolgte, in Form der Ausgangsspannung VRT des Temperatursensors 29 eingeschrieben.

Zur Überwachung werden von Zeit zu Zeit während des Betriebes diese Größen aus dem Speicher 28 ausgelesen und zum Vergleich mit der jeweils aktuellen Eigenfrequenz unter Berücksichtigung der aktuellen mit dem Sensor 29 gemessenen Temperatur (Ausgangsspannung $V_{TA}$) verglichen. Dem Vergleich liegen beispielsweise folgende Gleichungen zugrunde:

$$T_{adelta1} = (F_{0TA} - F_{0RT}) / T_{CF0}.$$

$$T_{adelta2} = (V_{TA} - V_{RT}) / T_{Cv}$$

Dabei ist $T_{delta2}$ die mit Hilfe des Temperatursensors ermittelte Temperaturänderung, $T_{adelta1}$ die aus der Änderung der Frequenz ermittelte Temperaturänderung, $T_{Cv}$ der im Speicher abgelegte Temperaturkoeffizient des Temperatursensors 29, $F_{0TA}$ die aktuelle Frequenz, $F_{0RT}$ die im Speicher abgelegte Frequenz und $T_{CF0}$ der ebenfalls im Speicher abgelegte Temperaturkoeffizient der Eigenfrequenz des Vibrationskreisels.

Der aktuelle Wert der Eigenfrequenz kann aus der jeweiligen Einstellung des Teilers des digitalen Frequenz-Synthesierers 10 und dessen Taktfrequenz gewonnen werden. Es ist jedoch auch möglich, den aktuellen Wert mit Hilfe einer Frequenzmesseinrichtung zu berechnen, die aus einem weiteren Verstärker 24, einem Schmitt-Trigger 25 und einem Zähler 26 besteht.

Im Idealfall sind $T_{adelta1}$ und $T_{adelta2}$ gleich; nimmt eine Differenz Werte an, die ein vorgegebenes Maß überschreiten, kann auf das Vorliegen eines von mehreren möglichen Fehlern geschlossen werden und beispielsweise ein Fehler in Form des Aufleuchtens einer Warnlampe signalisiert werden bzw. im Speicher abgelegt werden, um für spätere Diagnosezwecke zur Verfügung zu stehen.

Zur Berücksichtigung einer gegenüber dem Abgleich verschiedenen Verlustleistung der mindestens den primären Regelkreis 6 enthaltenden Schaltung wird mit Hilfe eines Messwiderstandes 32 mit dem Wert R die Stromaufnahme I der Schaltung gemessen. Die Betriebsspannung U für die Schaltung wird einem Anschluss 33 zugeführt und über einen Schaltungspunkt 34 an die verschiedenen Komponenten verteilt. Der Spannungsabfall $U_i$ am Messwiderstand 32 wird in einem Verstärker 35 um einen Faktor v verstärkt und über einen Multiplexer 36 dem Analog-/Digital-Wandler 30 zugeführt. Der Mikrocontroller 27 berechnet dann die Verlustleistung nach der Gleichung $P = U*I = U*U_i/(R*v)$. Beim Abgleich werden die Verlustleistung $P_{RT}$ und die zugehörige Umgebungstemperatur $T_{RT}$ im Speicher abgelegt. Die während des Betriebes berechnete Verlustleistung wird im Folgenden mit $P_A$ bezeichnet.

Damit kann eine Korrekturtemperatur berechnet werden, nämlich als $T_{kor} = T_{RT} + (P_A - P_{RT}) *R_{TH}$, wobei $R_{TH}$ den Wärmewiderstand zwischen der Schaltung und der Umgebung bedeutet. Die oben genannte Gleichung zur Berechnung von $T_{adelta2}$ wird damit wie folgt ergänzt:

$$T_{adelta2kor} = T_{adelta2} - T_{kor}$$

Wie oben bereits erwähnt, kann bei Ungleichheit ein Fehlersignal ausgegeben werden, nämlich wenn:

$$T_{adelta1} \neq T_{adelta2kor}.$$

**Patentansprüche**

1.  Verfahren zur Überwachung einer Sensoranordnung mit einem Vibrationskreisel, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, **dadurch gekennzeichnet,**

    - **dass** aus der Differenz zwischen dem aktuellen Wert der Eigenfrequenz, einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz ein erster Wert der Temperaturänderung gegenüber der Messung berechnet wird,
    - **dass** aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors ein zweiter Wert der Temperaturänderung gegenüber der Messung berechnet wird,
    - **dass** die beiden berechneten Werte verglichen werden und
    - **dass** bei einer ein vorgegebenes Maß überschreitenden Abweichung ein Fehlersignal erzeugt wird.

2.  Verfahren nach Anspruch 1, **dadurch gekennzeichnet, dass** in die Berechnung eine Korrekturtemperatur einbezogen wird, die gegenüber dem Abgleich des Temperatursensors geänderte thermische Bedingungen berücksichtigt.

3.  Verfahren nach Anspruch 2, **dadurch gekennzeichnet, dass** die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnet wird.

4.  Anordnung zur Überwachung einer Sensoranordnung mit einem Vibrationskreisel (1), der einen Resonator darstellt und Teil mindestens eines Regelkreises (1, 6) ist, der den Vibrationskreisel (1) durch Zuführung eines Erregersignals mit seiner Eigenfrequenz erregt, wobei dem Vibrationskreisel (1) ein Ausgangssignal entnehmbar ist, aus dem durch Filterung und Verstärkung das Erregersignal abgeleitet wird, **gekennzeichnet durch** Mittel (27)

    - zur Berechnung eines ersten Wertes einer Temperaturänderung aus der Differenz zwischen dem aktuellen Wert der Eigenfrequenz, einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz,
    - zur Berechnung eines zweiten Wertes einer Temperaturänderung aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors,
    - zum Vergleich der beiden berechneten Werte und
    - zur Erzeugung eines Fehlersignals bei einer ein vorgegebenes Maß überschreitenden Abweichung.

5.  Anordnung nach Anspruch 4, **dadurch gekennzeichnet, dass** die Mittel einen Mikrocontroller (27) mit einem nicht-flüchtigen Speicher (28) umfassen.

6.  Anordnung nach einem der Ansprüche 4 oder 5, **gekennzeichnet durch** Mittel, die eine Korrekturtemperatur in die Berechnung einbeziehen, die gegenüber dem Abgleich des Temperatursensors geänderte thermische Bedingungen berücksichtigt.

7.  Anordnung nach Anspruch 6, **gekennzeichnet durch** Mittel, welche die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnen.

8.  Anordnung nach einem der Ansprüche 4 bis 7, **gekennzeichnet durch** Mittel zur Bestimmung des aktuellen Wertes aus der jeweiligen Einstellung des Teilers eines digitalen Frequenz-Synthesierers (10) und dessen Taktfrequenz.

## Claims

1.  Method for monitoring a sensor arrangement comprising a vibration gyroscope which constitutes a resonator and is part of at least one control circuit which excites the vibration gyroscope by feeding an exciter signal at its natural frequency, wherein an output signal can be tapped from the vibration gyroscope and the exciter signal is derived from said output signal by filtering and amplification, **characterized**

    - **in that** a first value of the change in temperature compared to the measurement is calculated from the difference between the current value of the natural frequency and a value of the natural frequency which has been previously measured during adjustment, stored in a memory and measured at a reference temperature, and from the temperature coefficient of the natural frequency,
    - **in that** a second value of the change in temperature compared to the measurement is calculated from the difference between the output variables of a temperature sensor at the current temperature and at the reference temperature stored in the memory and the temperature coefficient of the temperature sensor,
    - **in that** the two calculated values are compared, and
    - **in that** a fault signal is generated when there is a deviation which exceeds a predefined amount.

2.  Method according to Claim 1, **characterized in that** a correction temperature which takes into account thermal conditions which have changed compared to the adjustment of the temperature sensor is included in the calculation.

3.  Method according to Claim 2, **characterized in that** the correction temperature is calculated from the measured power loss of an integrated circuit which contains the temperature sensor, from the power loss which has been measured during the adjustment and stored in the memory and from the thermal resistance of the integrated circuit with respect to the surroundings.

4.  Arrangement for monitoring a sensor arrangement comprising a vibration gyroscope (1) which constitutes a resonator and is part of at least one control circuit (1, 6) which excites the vibration gyroscope (1) by feeding an exciter signal at its natural frequency, wherein an output signal can be tapped from the vibration gyroscope (1) and the exciter signal is derived from said output signal by filtering and amplification, **characterized by** means (27)

    - in order to calculate a first value of a change in temperature from the difference between the current value of the natural frequency and a value of the natural frequency which has been previously measured during adjustment, stored in a memory and measured at a reference temperature, and from the temperature coefficient of the natural frequency,
    - in order to calculate a second value of a change in temperature from the difference between the output variables of a temperature sensor at the current temperature and at the reference temperature stored in the memory and the temperature coefficient of the temperature sensor,
    - in order to compare the two calculated values, and
    - in order to generate a fault signal when there is a deviation which exceeds a predefined amount.

5.  Arrangement according to Claim 4, **characterized in that** the means comprise a microcontroller (27) with a nonvolatile memory (28).

6.  Arrangement according to one of claims 4 or 5, **characterized by** means which include a correction temperature in the calculation which takes into account thermal conditions which have changed compared to the adjustment of the temperature sensor.

7.  Arrangement according to Claim 6, **characterized by** means which calculate the correction temperature from the measured power loss of an integrated circuit which contains the temperature sensor, from the power loss which has been measured during the adjustment and stored in the memory and from the thermal resistance of the integrated circuit with respect to the surroundings.

8. Arrangement according to one of Claims 4 to 7, **characterized by** means for determining the current value from the respective setting of the divider of a digital frequency synthesizer (10) and its clock frequency.

**Revendications**

1. Procédé permettant de surveiller un dispositif de détection, comportant un gyroscope à vibrations, qui constitue un résonateur et qui fait partie de au moins un circuit de régulation, lequel excite avec sa fréquence propre le gyroscope à vibrations en lui appliquant un signal d'excitation, où il est possible d'extraire du gyroscope à vibrations un signal de sortie à partir duquel le signal d'excitation est déduit par filtrage et amplification, **caractérisé par le fait**

   - **que**, à partir de la différence entre la valeur actuelle de la fréquence propre et une valeur de la fréquence propre mesurée auparavant lors d'un calibrage et stockée dans une mémoire, cette mesure ayant été effectuée à une température de référence, et à partir du coefficient de température de la fréquence propre, une première valeur de la variation de température par rapport à la mesure,
   - **que**, à partir de la différence entre les valeurs de sortie d'un détecteur de température à la température actuelle et à la température de référence stockée dans la mémoire et à partir du coefficient de température du détecteur de température, une deuxième valeur de la variation de température par rapport à la mesure est calculée,
   - **que** les deux valeurs calculés sont comparées l'une à l'autre et
   - **que**, pour une déviation supérieure à une valeur donnée, un signal d'erreur est généré.

2. Procédé selon la revendication 1, **caractérisé par le fait qu'**une correction de température est introduite dans le calcul, laquelle correction de température tient compte des conditions thermiques qui ont été modifiées par rapport au calibrage du détecteur de température.

3. Procédé selon la revendication 2, **caractérisé par le fait que** la correction de température est calculée à partir de la puissance dissipée mesurée dans un circuit intégré contenant le détecteur de température, à partir de la puissance dissipée mesurée lors du calibrage et stockée dans la mémoire et à partir de la résistance thermique du circuit intégré par rapport au milieu ambiant.

4. Dispositif permettant de surveiller un dispositif de détection, comportant un gyroscope à vibrations (1), qui constitue un résonateur et qui fait partie de au moins un circuit de régulation (1, 6), lequel excite avec sa fréquence propre le gyroscope à vibrations (1) en lui appliquant un signal d'excitation avec sa fréquence propre, où il est possible d'extraire du gyroscope à vibrations (1) un signal de sortie à partir duquel le signal d'excitation est déduit par filtrage et amplification, **caractérisé par des moyens** (27)

   - permettant de calculer une première valeur d'une variation de température à partir de la différence entre la valeur actuelle de la fréquence propre, une valeur de la fréquence propre mesurée auparavant lors d'un calibrage et stockée dans une mémoire, valeur qui a été mesurée à une température de référence, et à partir du coefficient de température de la fréquence propre,
   - permettant de calculer une deuxième valeur d'une variation de température à partir de la différence entre les grandeurs de sortie d'un détecteur de température à la température actuelle et à la température de référence stockée dans la mémoire et à partir du coefficient de température du détecteur de température,
   - permettant de comparer l'une à l'autre les deux valeurs calculées et
   - permettant de générer un signal d'erreur lorsqu'une déviation est supérieure à une valeur donnée.

5. Dispositif selon la revendication 4, **caractérisé par le fait que** les moyens comprennent un microcontrôleur (27) comportant une mémoire non volatile (28).

6. Dispositif selon l'une des revendications 4 ou 5, **caractérisé par** des moyens qui introduisent une correction de température dans le calcul, lequel tient compte des conditions thermiques qui ont été modifiées par rapport au calibrage du détecteur de température.

7. Dispositif selon la revendication 6, **caractérisé par des** moyens qui calculent la correction de température à partir de la puissance dissipée d'un circuit intégré contenant le détecteur de température, à partir de la puissance dissipée mesurée lors du calibrage et stockée dans la mémoire et à partir de la résistance thermique du circuit intégré par rapport au milieu ambiant.

**8.** Dispositif selon l'une des revendications 4 à 7, **caractérisé par** des moyens qui permettent de déterminer la valeur actuelle à partir du réglage respectif du diviseur d'un synthétiseur numérique de fréquence (10) et de sa fréquence d'horloge.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0461761 B1
- WO 200501378 A1

- EP 0307321 A1